# EUROPÄISCHE PATENTSCHRIFT

(11) **EP 3 482 632 B1**
(45) Veröffentlichungstag und Bekanntmachung des Hinweises auf die Patenterteilung: **11.10.2023**
(21) Anmeldenummer: 18401087.4
(22) Anmeldetag: 30.10.2018
(51) Int. Cl.: A01M 7/00

(54) **VERFAHREN ZUM AUSBRINGEN EINER SPRITZFLÜSSIGKEIT**
METHOD FOR APPLICATION OF A LIQUID TO BE SPRAYED
PROCÉDÉ D'APPLICATION D'UN FLUIDE DE PULVÉRISATION

(30) Priorität: 09.11.2017 DE 102017126222
(43) Veröffentlichungstag der Anmeldung: 15.05.2019
(73) Patentinhaber: Amazonen-Werke H. Dreyer SE & Co. KG, 49205 Hasbergen (DE)
(72) Erfinder: Resch, Rainer, 49170 Hagen a TW (DE)

(56) Entgegenhaltungen:
- EP-A1- 3 165 089
- US-A1- 2002 024 665
- US-B1- 6 199 000

## Beschreibung

Die Erfindung betrifft ein Verfahren zum Ausbringen einer Spritzflüssigkeit mit einem landwirtschaftlichen Spritzgerät nach dem Oberbegriff des Patentanspruchs 1 und ein landwirtschaftliches Spritzgerät, insbesondere eine Feldspritze, nach dem Oberbegriff des Patentanspruchs 10.

Während des Aufwuchses eines Nutzpflanzenbestandes auf einer landwirtschaftlichen Nutzfläche entsteht regelmäßig auch Schadbewuchs, welcher durch das Ausbringen von Spritzflüssigkeit mittels eines landwirtschaftlichen Spritzgeräts bekämpft wird, um eine Ertragssteigerung zu erreichen und einen Mischbewuchs auf der landwirtschaftlichen Nutzfläche zu verhindern.

Damit Spritzflüssigkeit lokal auf den Schadbewuchs ausgebracht werden kann, bedarf es zunächst einer Erfassung des Schadbewuchses und dessen Position. In der Druckschrift DE 44 13 739 A1 wird hierzu ein System beschrieben, welches mittels einer optischen Erfassungseinrichtung Unterschiede zwischen Kultur- und Wildpflanzen feststellt, sodass die Ausbringung von Spritzflüssigkeit entsprechend beeinflusst werden kann.

Die ausschließlich optische Erfassung von Schadbewuchs innerhalb eines Nutzpflanzenbestandes führt jedoch in einer Vielzahl von Anwendungsfällen nicht zu zufriedenstellenden Ergebnissen, sodass trotz entsprechender Spritzmaßnahmen ein vergleichsweise hoher Schadbewuchsanteil innerhalb des Nutzpflanzenbestandes verbleibt oder die Spritzflüssigkeit an falschen Positionen ausgebracht wird. Eine Fehlausbringung der Spritzflüssigkeit kann zu einer erheblichen Beeinträchtigung des Nutzpflanzenbestandes führen.

Ferner ist aus der Druckschrift US 6 199 000 B1 sowie der US 2015/0245565 A1 bekannt, dass bei der Unterscheidung zwischen Nutz- und Wildpflanzen Pflanzenreiheninformationen berücksichtigt werden können, um die Erfassungsrate des Schadbewuchses innerhalb eines Nutzpflanzenbestandes zu erhöhen.

Die sensorische Erfassung entsprechender Pflanzenreihen ist jedoch aufwendig und kostenintensiv und aus diesem Grund lediglich bedingt geeignet für den praktischen Einsatz. Darüber hinaus ist die sensorische Erfassung von Pflanzenreihen vergleichsweise fehleranfällig und ist beispielsweise im Falle optischer Erfassung von den vorherrschenden oder wechselnden Lichtverhältnissen abhängig.

Die der Erfindung zugrunde liegende Aufgabe besteht somit darin, die Erfassung und/oder Bekämpfung von Schadbewuchs innerhalb eines Nutzpflanzenbestandes zu vereinfachen und/oder zu verbessern.

Die Aufgabe wird durch die kennzeichnenden Merkmale des Anspruchs 1 gelöst.

Die Erfindung macht sich die Erkenntnis zunutze, dass Saatgut-Positionsinformationen einen Rückschluss auf die Anordnung und Ausbildung von Pflanzenreihen eines Nutzpflanzenbestandes zulassen. Entsprechende Saatgut-Positionsinformationen werden von modernen Sämaschinen während der Aussaat ohnehin gespeichert und stehen bei der Ausbringung der Spritzflüssigkeit zur Verfügung. Auf Basis der Saatgut-Positionsinformationen kann festgestellt werden, an welchen Positionen oder in welchen Bereichen Nutzpflanzen zu erwarten sind. An abweichenden Positionen oder außerhalb entsprechender Bereiche identifizierter Bewuchs kann somit auf einfache Weise als Schadbewuchs identifiziert werden. Eine aufwendige und kostenintensive sensorische Erfassung von Pflanzenreihen ist in diesem Fall nicht zwingend notwendig. Gegenüber einer ausschließlich optischen Erfassung von Unterschieden zwischen Kultur- und Wildpflanzen führt das erfindungsgemäße Verfahren zu einer erheblich gesteigerten Erfassungsrate und somit zu höheren Erträgen und einem verringerten Mischbewuchs.

Schadbewuchs kann beispielsweise eine oder mehrere Schadpflanzen umfassen, wobei Schadpflanzen beispielsweise Wildpflanzen oder andere Pflanzen, welche nicht der ausgesäten Nutzpflanzensorte entsprechen, sein können. Das Erfassen des potentiellen Schadbewuchses und dessen Position erfolgt vorzugsweise unter Verwendung eines Satellitennavigationsmoduls, insbesondere eines GPS-Moduls. Außerdem kann das Erfassen des potentiellen Schadbewuchses und dessen Position das Aufzeichnen von geografischen Positionsdaten umfassen. Ferner kann das Erfassen des potentiellen Schadbewuchses und dessen Position unter Verwendung einer oder mehrerer optischer Erfassungseinrichtungen und/oder kamerabasiert erfolgen.

In einer bevorzugten Ausführungsform des erfindungsgemäßen Verfahrens umfassen die Saatgut-Positionsinformationen Saatreihen-Positionsinformationen und/oder Ausbringfahrspur-Positionsinformationen. Alternativ oder zusätzlich können die Saatgut-Positionsinformationen geografische Positionsinformationen zu einzelnen abgelegten Saatkörnern umfassen. Regelmäßig ist bei der Aussaat von Saatgut die Konfiguration der Sämaschine bekannt, sodass bei bekannter Position der Ausbringfahrspur der Verlauf und/oder die Position der Saatreihen abgeleitet werden kann. Aus diesem Grund ist bereits die Datenaufzeichnung mittels eines einzelnen Satellitennavigationsmoduls während der Aussaat ausreichend, um Positionsinformationen für sämtliche Saatreihen ableiten zu können.

Während des Erfassens des potentiellen Schadbewuchses und/oder während des Identifizierens des tatsächlichen Schadbewuchses kann sich das landwirtschaftliche Spritzgerät parallel oder schräg zu den Saatreihen und/oder Pflanzenreihen bewegen. Auf diese Weise wird das Erfassen des potentiellen Schadbewuchses und/oder das Identifizieren des tatsächlichen Schadbewuchses beispielsweise im Vorgewende oder bei einem Richtungswechsel erheblich vereinfacht.

Das erfindungsgemäße Verfahren wird ferner dadurch vorteilhaft weitergebildet, dass Nutzbewuchsbereiche ermittelt werden, in welchen entsprechend der Saatgut-Positionsinformationen Nutzpflanzen zu erwarten sind. Alternativ oder zusätzlich werden Schadbewuchsbereiche ermittelt, in welchen entsprechend der Saatgut-Positionsinformationen Schadpflanzen zu erwarten sind. Die Nutzbewuchsbereiche erstrecken sich dabei vorzugsweise entlang der Saatreihen. Die Schadbewuchsbereiche betreffen dabei die Flächen zwischen benachbarten Saatreihen. Abhängig von dem Abstand des Saatguts innerhalb einzelner Saatreihen können sich auch zwischen dem Saatgut einzelner Saatreihen Schadbewuchsbereiche ergeben. Durch einen Abgleich der Position des erfassten potentiellen Schadbewuchses mit den ermittelten Nutzbewuchsbereichen und/oder den ermittelten Schadbewuchsbereichen lässt sich auf einfache Weise feststellen, ob es sich bei dem potentiellen Schadbewuchs um tatsächlichen Schadbewuchs handelt, auf welchen lokal Spritzflüssigkeit auszubringen ist.

Ferner ist ein erfindungsgemäßes Verfahren bevorzugt, bei welchem dem landwirtschaftlichen Spritzgerät die Saatgut-Positionsinformationen kabelgebunden bereitgestellt werden. Alternativ oder zusätzlich können dem landwirtschaftlichen Spritzgerät die Saatgut-Positionsinformationen kabellos bereitgestellt werden. Die Bereitstellung der Saatgut-Positionsinformationen kann beispielsweise aufgrund einer Datenabfrage des landwirtschaftlichen Spritzgeräts oder aufgrund eines entsprechenden Sendebefehls, welcher über eine Verwaltungsanwendung eingegeben wurde, insbesondere über einen Personal Computer oder ein mobiles Endgerät, erfolgen. Die Verwaltungsanwendung kann beispielsweise Bestandteil eines Farm-Management-Systems sein, mittels welchem ein Landwirt seine landwirtschaftlichen Nutzflächen verwalten kann. Beispielsweise sind über die Verwaltungsanwendung Applikationskarten zu einzelnen landwirtschaftlichen Nutzflächen zur späteren Verwendung hinterlegbar. Derartige Applikationskarten können die Saatgut-Positionsinformationen umfassen. Das Bereitstellen der Saatgut-Positionsinformationen für das landwirtschaftliche Spritzgerät erfolgt vorzugsweise vor und/oder während dem Ausbringen der Spritzflüssigkeit. Dabei können die Saatgut-Positionsinformationen beispielsweise von einem Benutzer des landwirtschaftlichen Spritzgeräts lokal und/oder durch einen Dritten, beispielsweise einen Dienstleister, bereitgestellt werden.

In einer anderen Ausführungsform des erfindungsgemäßen Verfahrens umfasst das Bereitstellen der Saatgut-Positionsinformationen für das landwirtschaftliche Spritzgerät das Senden der Saatgut-Positionsinformationen von einem mobilen Datenträger an das landwirtschaftliche Spritzgerät. Der mobile Datenträger kann beispielsweise ein Speicher-Stick, beispielsweise ein USB-Stick, sein. Der mobile Datenträger kann jedoch auch Bestandteil eines mobilen Endgeräts, beispielsweise eines Smartphones oder eines Tablets, sein. Ferner kann das Bereitstellen der Saatgut-Positionsinformationen für das landwirtschaftliche Spritzgerät das Senden der Saatgut-Positionsinformationen von einem Zentralrechner, insbesondere über Mobilfunk, an das landwirtschaftliche Spritzgerät umfassen. Der Zentralrechner kann beispielsweise ein Server sein, welcher von einem Landmaschinenhersteller oder einem Drittanbieter betrieben wird. Der Zentralrechner kann einem Farm-Management-System zugeordnet sein, sodass ein Landwirt mittels einer entsprechenden Verwaltungsanwendung auf den Zentralrechner zugreifen kann. Beispielsweise sind Applikationskarten zu einzelnen landwirtschaftlichen Nutzflächen zur späteren Verwendung auf dem Zentralrechner hinterlegbar. Derartige Applikationskarten können die Saatgut-Positionsinformationen umfassen. Insbesondere erfolgt das Senden der Saatgut-Positionsinformationen von dem Zentralrechner an das landwirtschaftliche Spritzgerät unter Verwendung des Internets. Beispielsweise kann ein Landmaschinenhersteller oder ein Drittanbieter Datenbanksysteme bereitstellen, welche ein Landwirt zum Speichern von Saatgut-Positionsinformationen während oder nach der Aussaat von Saatgut und/oder zum Abrufen von Saatgut-Positionsinformationen vor und/oder während der Ausbringung von Spritzflüssigkeit nutzen kann. Das Bereitstellen der Saatgut-Positionsinformationen für das landwirtschaftliche Spritzgerät kann außerdem das Senden der Saatgut-Positionsinformationen von einer Sämaschine an das landwirtschaftliche Spritzgerät umfassen. Dabei kann eine unmittelbare Zusendung der Saatgut-Positionsinformationen von der Sämaschine an das landwirtschaftliche Spritzgerät erfolgen. Alternativ oder zusätzlich kann die Zusendung der Saatgut-Positionsinformationen von der Sämaschine an das landwirtschaftliche Spritzgerät über eine oder mehrere Zwischeninstanzen, beispielsweise über ein Farm-Management-System, erfolgen.

Außerdem ist ein erfindungsgemäßes Verfahren bevorzugt, bei welchem Saatgut-Positionsinformationen durch eine Sämaschine, insbesondere während des Ausbringens von Saatgut, aufgezeichnet werden. Die Aufzeichnung von Saatgut-Positionsinformationen erfolgt vorzugsweise unter Verwendung eines Satellitennavigationsmoduls, insbesondere eines GPS-Moduls, der Sämaschine. Das Aufzeichnen von Saatgut-Positionsinformationen kann auch das Berechnen von Saatgut-Positionsinformationen umfassen, beispielsweise auf Grundlage der Maschinenkonfiguration der Sämaschine und geografischen Positionsdaten, welche durch die Sämaschine während der Aussaat erfasst werden.

In einer weiteren Ausführungsform des erfindungsgemäßen Verfahrens werden die aufgezeichneten Saatgut-Positionsinformationen durch die Sämaschine gespeichert. Alternativ oder zusätzlich werden die aufgezeichneten und/oder gespeicherten Saatgut-Positionsinformationen durch die Sämaschine bereitgestellt. Das Speichern der aufgezeichneten Saatgut-Positionsinformationen durch die Sämaschine kann entweder auf einem sämaschineninternen Datenspeicher oder auf einem sämaschinenexternen Datenspeicher erfolgen.

In einer Weiterbildung des erfindungsgemäßen Verfahrens umfasst das Bereitstellen der aufgezeichneten und/oder gespeicherten Saatgut-Positionsinformationen durch die Sämaschine das Senden der Saatgut-Positionsinformationen von der Sämaschine an einen mobilen Datenträger, das Senden der Saatgut-Positionsinformationen von der Sämaschine an einen Zentralrechner, insbesondere über Mobilfunk, und/oder das Senden der Saatgut-Positionsinformationen von der Sämaschine an das landwirtschaftliche Spritzgerät.

Vorteilhaft ist außerdem ein erfindungsgemäßes Verfahren, bei welchem der Bewuchs mittels eines oder mehrerer Spektralsensoren durch das landwirtschaftliche Spritzgerät untersucht wird. Insbesondere wird der Bewuchs hinsichtlich seiner Strahlungseigenschaften und/oder Reflexionseigenschaften und/oder hinsichtlich seiner Farbe untersucht. Dabei wird zum Identifizieren von tatsächlichem Schadbewuchs ein Nutzbewuchs-Spektralbereich definiert, welchem im Wesentlichen sämtlicher zu erwartender Nutzbewuchs zugeordnet ist.

Erfasst der eine oder erfassen die mehreren Spektralsensoren einen Bewuchs, welcher außerhalb des zuvor definierten Nutzbewuchs-Spektralbereichs liegt, erfolgt die Einstufung des Bewuchses als Schadbewuchs. Außerdem kann zum Identifizieren von tatsächlichem Schadbewuchs ein Schadbewuchs-Spektralbereich definiert sein, welchem im Wesentlichen sämtlicher zu erwartender Schadbewuchs zugeordnet werden kann. Erfasst der eine oder erfassen die mehreren Spektralsensoren einen Bewuchs, welcher hinsichtlich seiner Strahlungseigenschaften und/oder Reflexionseigenschaften und/oder hinsichtlich seiner Farbe untersucht. Dabei kann zum Identifizieren von tatsächlichem Schadbewuchs ein Nutzbewuchs-Spektralbereich definiert sein, welchem im Wesentlichen sämtlicher zu erwartender Nutzbewuchs zugeordnet werden kann. Erfasst der eine oder erfassen die mehreren Spektralsensoren einen Bewuchs, welcher außerhalb des zuvor definierten Nutzbewuchs-Spektralbereichs liegt, erfolgt die Einstufung des Bewuchses als Schadbewuchs. Erfindungsgemäß ist zum Identifizieren von tatsächlichem Schadbewuchs ein Schadbewuchs-Spektralbereich definiert, welchem im Wesentlichen sämtlicher zu erwartender Schadbewuchs zugeordnet werden kann. Erfasst der eine oder erfassen die mehreren Spektralsensoren einen Bewuchs, welcher innerhalb des zuvor definierten Schadbewuchs-Spektralbereichs liegt, erfolgt die Einstufung des Bewuchses als Schadbewuchs. Darüber hinaus kann zum Identifizieren von tatsächlichem Schadbewuchs ein Boden-Spektralbereich definiert sein, welcher die zu erwartenden Strahlungseigenschaften, Reflexionseigenschaften und/oder die zu erwartende Farbe des Ackerbodens definiert. Erfasst der eine oder erfassen die mehreren Spektralsensoren einen Bewuchs, welcher außerhalb des zuvor definierten Boden-Spektralbereichs liegt, erfolgt die Einstufung des Bewuchses als Schadbewuchs. Die Identifikation von Schadbewuchs unter Berücksichtigung eines Boden-Spektralbereichs ist insbesondere dann vorteilhaft, wenn noch kein Nutzbewuchs auf dem Ackerboden zu erwarten ist, sodass sämtlicher vorhandener Bewuchs als Schadbewuchs bewertet werden kann. Außerdem ist ein Verfahren erfindungsgemäß, bei welchem das Identifizieren des tatsächlichen Schadbewuchses durch das landwirtschaftliche Spritzgerät auch auf Grundlage der Daten des einen oder der mehreren Spektralsensoren erfolgt. Erfindungsgemäß sind mehrere Spektralbereiche definiert, wobei durch die mehreren unterschiedlichen Spektralbereiche unterschiedliche Schadpflanzentypen oder Schadpflanzensorten erfasst werden.

Dies erlaubt die Abgabe unterschiedlicher Mengen eines Wirkstoffs oder die Abgabe von unterschiedlichen Wirkstoffen oder Wirkstoffmischungen auf die verschiedenen Schadpflanzentypen oder Schadpflanzensorten.

Außerdem ist ein erfindungsgemäßes Verfahren vorteilhaft, welches das Erfassen von Nutzbewuchs, insbesondere von Nutzbewuchsreihen, und deren Position durch das landwirtschaftliche Spritzgerät, das Vergleichen der erfassten Positionen des Nutzbewuchses und der Saatgut-Positionsinformationen, und/oder das Korrigieren der Saatgut-Positionsinformation anhand der erfassten Positionen des Nutzbewuchses umfasst. Bei der Aufzeichnung von Saatgut-Positionsinformationen mit den erfassten Positionen des Nutzbewuchses verglichen werden, kann eine Korrektur der Saatgut-Positionsinformationen erfolgen, welche etwaige Ungenauigkeiten der Saatgut-Positionsinformationen eliminiert oder zumindest erheblich verringert.

Die der Erfindung zugrunde liegende Aufgabe wird ferner durch die kennzeichnenden Merkmale des Anspruchs 10 gelöst. Hinsichtlich der Vorteile und Modifikationen des erfindungsgemäßen Spritzgeräts wird zunächst auf die Vorteile und Modifikationen des erfindungsgemäßen Verfahrens verwiesen.

In einer besonders bevorzugten Ausführungsform des erfindungsgemäßen Spritzgeräts umfasst die Erfassungseinrichtung ein oder mehrere Satellitennavigationsmodule, insbesondere ein oder mehrere GPS-Module, mittels welchen die Position des potentiellen Schadbewuchses erfassbar ist. Dabei kann beispielsweise zunächst die Relativposition eines potentiellen Schadbewuchses zu einem Sensor, beispielsweise einem optischen Sensor oder einem Radarsensor, oder einer Kamera erfasst werden, bevor über die Relativposition des Sensors oder der Kamera zu einem oder mehreren Satellitennavigationsmodulen die geografische Position des erfassten potentiellen Schadbewuchses ermittelt wird.

In einer Weiterbildung des erfindungsgemäßen Spritzgeräts umfasst die Erfassungseinrichtung einen oder mehrere Spektralsensoren, mittels welchen eine Spektraluntersuchung des Bewuchses durchführbar ist. Vorzugsweise ist der eine oder sind die mehreren Spektralsensoren als Farbsensoren, Infrarot-Sensoren oder Radarsensoren ausgebildet und/oder sind Bestandteil einer Kamera, wobei auch verschiedene Sensor- und/oder Kameratypen in Kombination eingesetzt werden können. Insbesondere ist der eine oder sind die mehreren Spektralsensoren dazu eingerichtet, Farben, Strahlungszustände und/oder Reflexionszustände zu erfassen und/oder erlauben die Erstellung von Strahlungssignaturen, insbesondere von Infrarotsignaturen.

In einer anderen Ausführungsform des erfindungsgemäßen Spritzgeräts ist das Spritzgerät zum Ausführen des Verfahrens zum Ausbringen einer Spritzflüssigkeit nach einer der vorstehend beschriebenen Ausführungsformen ausgebildet.

Weitere Einzelheiten der Erfindung sind der Figurenbeschreibung und den Zeichnungen zu entnehmen. Es zeigen
- Fig. 1: ein Ausführungsbeispiel des erfindungsgemäßen landwirtschaftlichen Spritzgeräts während des Ausführens des erfindungsgemäßen Verfahrens; und
- Fig. 2: einen Nutzpflanzenbestand, auf welchen mittels des erfindungsgemäßen Verfahrens Spritzflüssigkeit auszubringen ist.

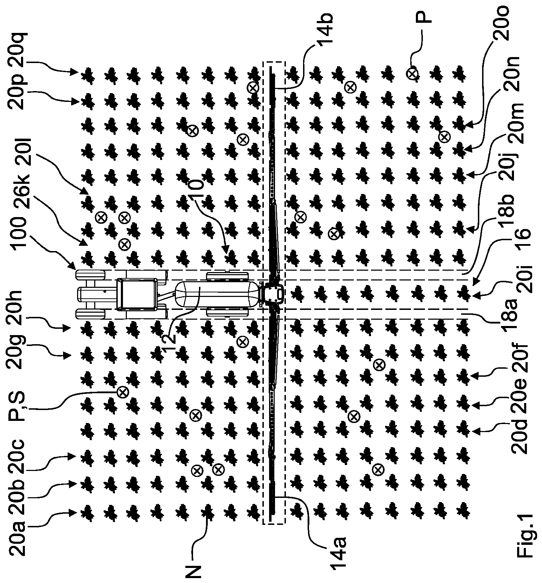

Die Fig. 1 zeigt eine Ausbringkombination aus einem als Traktor ausgebildeten landwirtschaftlichen Fahrzeug 100 und einem von dem Fahrzeug 100 gezogenen und als Feldspritze ausgebildeten landwirtschaftlichen Spritzgerät 10.

Das landwirtschaftliche Spritzgerät 10 umfasst einen Vorratsbehälter 12, in welchem eine auszubringende Spritzflüssigkeit oder eine Trägerflüssigkeit, welche noch mit einem Wirkstoff zu einer auszubringenden Spritzflüssigkeit zu vermischen ist, bevorratet ist. Der Vorratsbehälter 12 ist fluidleitend mit einer Vielzahl von als Spritzdüsen ausgebildeten Ausbringelementen verbunden, welche an einem mehrteiligen Spritzgestänge 14a, 14b angeordnet sind.

Die Ausbringelemente sind mit einer Steuerungseinrichtung verbunden, welche es erlaubt, die Ausbringung der Spritzflüssigkeit derart zu steuern, dass die Spritzflüssigkeit lediglich lokal und nicht über die gesamte Arbeitsbreite des Spritzgeräts 10 ausgebracht wird. Ferner kann das Spritzgerät auch dazu eingerichtet sein, verschiedene Spritzflüssigkeiten, beispielsweise mit unterschiedlichen Wirkstoffkonzentrationen und/oder unterschiedlichen Wirkstoffen, lokal auszubringen.

Die Spritzflüssigkeit wird auf einer landwirtschaftlichen Nutzfläche ausgebracht, welche neben Nutzbewuchs N auch Schadbewuchs S aufweist. Der Nutzbewuchs N ist in Nutzbewuchsreihen 20a-20q angeordnet. Die Nutzbewuchsreihen 20a-20q ergeben sich, da die Aussaat des Saatguts ebenfalls in entsprechenden Reihen erfolgt. Ziel der Spritzflüssigkeitsausbringung ist die lokale Abgabe der Spritzflüssigkeit auf den Schadbewuchs S. Die Ausbringkombination aus dem landwirtschaftlichen Fahrzeug 100 und dem landwirtschaftlichen Spritzgerät 10 fährt entlang einer Fahrgasse 16, welche zwei Fahrspuren 18a, 18b aufweist, wobei zwischen den Fahrspuren 18a, 18b ebenfalls eine Nutzbewuchsreihe 20i angeordnet ist.

Das landwirtschaftliche Spritzgerät 10 weist eine Erfassungseinrichtung auf, welche dazu eingerichtet ist, potentiellen Schadbewuchs P und dessen Position zu erfassen. Potentieller Schadbewuchs P kann beispielsweise Bewuchs sein, dessen Strahlungseigenschaften, Reflexionseigenschaften oder Farbe von den üblichen und/oder zu erwartenden Strahlungseigenschaften, Reflexionseigenschaften oder der üblichen und/oder zu erwartenden Farbe der ausgesäten Nutzpflanzen abweicht. Potentieller Schadbewuchs P kann beispielsweise auch Bewuchs sein, dessen Position innerhalb eines Bereichs liegt, in dem Schadbewuchs und/oder kein Nutzbewuchs zu erwarten ist. Die Steuerungseinrichtung ist dazu eingerichtet, auf Grundlage von Saatgut-Positionsinformationen und der Position des erfassten potentiellen Schadbewuchses P den tatsächlichen Schadbewuchs S zu identifizieren, um Spritzflüssigkeit lokal auf den tatsächlichen Schadbewuchs S ausbringen zu können.

Die Erfassungseinrichtung umfasst ein Satellitennavigationsmodul, welches als GPS-Modul ausgebildet ist, und mehrere optische Sensoren. Die optischen Sensoren sind an dem Verteilergestänge 14a, 14b angeordnet und erlauben die optische Erfassung des potentiellen Schadbewuchses P. Beispielsweise sind die optischen Sensoren als Spektralsensoren ausgebildet, mittels welchen eine Spektraluntersuchung des Bewuchses durchführbar ist. Über die Sensordaten der optischen Sensoren, die geographischen Positionsdaten des Satellitennavigationsmoduls und die Relativposition zwischen den optischen Sensoren und dem Satellitennavigationsmodul lässt sich die Position des potentiellen Schadbewuchses P ermitteln.

Die Saatgut-Positionsinformationen sind Saatreihen-Positionsinformationen, aus welchen die Steuerungseinrichtung die zu erwartenden Positionen der Nutzbewuchsreihen 20a-20q ableiten kann. Durch einen Abgleich der Saatgut-Positionsinformationen oder Informationen, welche aus den Saatgut-Positionsinformationen abgeleitet wurden, und der Position des potentiellen Schadbewuchses P kann somit auf eine verlässliche und vergleichsweise kostengünstige Weise tatsächlicher Schadbewuchses S durch das landwirtschaftliche Spritzgerät 10 identifiziert werden, sodass eine entsprechende lokale Ausbringung von Spritzflüssigkeit erfolgen kann.

Die Saatgut-Positionsinformationen wurden zuvor von einer Sämaschine während des Ausbringens des Saatguts aufgezeichnet, gespeichert und einem Zentralrechner zum späteren Abruf bereitgestellt. Der Zentralrechner ist hierbei ein Server, welcher einem Farm-Management-System zugeordnet ist. Die Hinterlegung der Saatgut-Positionsinformationen erfolgte in Form einer Applikationskarte, welche Ablagepositionen des ausgebrachten Saatguts umfasst. Über einen Sendebefehl, welcher über eine Verwaltungsanwendung auf einem mobilen Endgerät eingegeben wurde, wurde das Senden der Saatgut-Positionsinformationen von dem Zentralrechner des Farm-Management-Systems an das landwirtschaftliche Spritzgerät 10 vor dem Ausbringen der Spritzflüssigkeit initiiert. Der Zentralrechner stellt somit eine Datenbank zum Speichern und Abrufen von Agrardaten bereit.

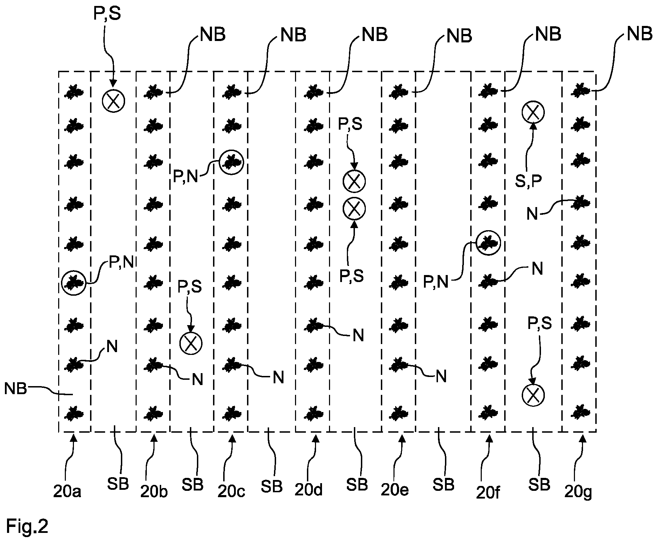

Die Fig. 2 zeigt schematisch, wie der Pflanzenbestand während des Ausführens einer Ausführungsform des Verfahrens in Nutzbewuchsbereiche NB und Schadbewuchsbereiche SB eingeteilt wird. Die Ermittlung der Nutzbewuchsbereiche NB und Schadbewuchsbereiche SB erfolgt durch das landwirtschaftliche Spritzgerät 10 auf Grundlage der dem landwirtschaftlichen Spritzgerät 10 zur Verfügung gestellten Saatgut-Positionsinformationen. Nutzbewuchsbereiche NB stellen Bereiche dar, in welchen entsprechend der Saatgut-Positionsinformationen Nutzpflanzen zu erwarten sind. Schadbewuchsbereiche SB stellen Bereiche dar, in welchen entsprechend der Saatgut-Positionsinformationen Schadpflanzen zu erwarten sind. Abhängig davon, ob die Position eines erfassten potentiellen Schadbewuchses P in einem Nutzbewuchsbereich NB oder in einem Schadbewuchsbereich SB liegt, wird der potentielle Schadbewuchs P als tatsächlicher Schadbewuchs S oder als Nutzbewuchs N bewertet.

Ferner ist es mittels des Verfahrens auch möglich die Nutzbewuchsreihen 20a-20q und deren Positionen zu erfassen und diese mit den Saatgut-Positionsinformationen zu vergleichen. Auf diese Weise können Ungenauigkeiten der Saatgut-Positionsinformationen, welche auf die Aufzeichnungssensorik zurückzuführen ist, korrigiert werden. Durch das Korrigieren der Saatgut-Positionsinformationen anhand der erfassten Positionen der Nutzbewuchsreihen 20a-20q werden Aufzeichnungsungenauigkeiten bei der satellitengestützten Positionserfassung zumindest teilweise ausgeglichen.

### Bezugszeichenliste

- 10: Spritzgerät
- 12: Vorratsbehälter
- 14a, 14b: Verteilergestänge
- 16: Fahrgasse
- 18a, 18b: Fahrspuren
- 20a-20q: Nutzbewuchsreihen

- 100: Fahrzeug

- P: potentieller Schadbewuchs
- S: tatsächlicher Schadbewuchs
- N: Nutzbewuchs

- SB: Schadbewuchsbereiche
- NB: Nutzbewuchsbereiche

## Patentansprüche

1. Verfahren zum Ausbringen einer Spritzflüssigkeit mit einem landwirtschaftlichen Spritzgerät (10), mit den Schritten:
- Erfassen eines potentiellen Schadbewuchses (P) und dessen Position durch das landwirtschaftliche Spritzgerät (10); und
- Steuern der Ausbringung der Spritzflüssigkeit durch das landwirtschaftliche Spritzgerät (10) derart, dass die Spritzflüssigkeit lokal auf tatsächlichen Schadbewuchs (S) ausgebracht wird;
- Identifizieren des tatsächlichen Schadbewuchses (S) durch das landwirtschaftliche Spritzgerät (10) auf Grundlage von Saatgut-Positionsinformationen und der Position des erfassten potentiellen Schadbewuchses (P)
**gekennzeichnet durch** den Schritt:
- Untersuchen des Bewuchses mittels eines oder mehrerer Spektralsensoren durch das landwirtschaftliche Spritzgerät (10), wobei das Identifizieren des tatsächlichen Schadbewuchses (S) durch das landwirtschaftliche Spritzgerät (10) auch auf Grundlage der Daten des einen oder der mehreren Spektralsensoren erfolgt, wobei zum Identifizieren von tatsächlichem Schadbewuchs (S) ein Schadbewuchs-Spektralbereich definiert ist, welchem im Wesentlichen sämtlicher zu erwartender Schadbewuchs (S) zugeordnet werden kann, oder mehrere unterschiedliche Spektralbereiche definiert sind, durch welche unterschiedliche Schadpflanzentypen oder Schadpflanzensorten erfasst werden können.

2. Verfahren nach Anspruch 1,
**dadurch gekennzeichnet, dass** die Saatgut-Positionsinformationen Saatreihen-Positionsinformationen und/oder Ausbringfahrspur-Positionsinformationen umfassen.

3. Verfahren nach Anspruch 1 oder 2,
**gekennzeichnet durch** zumindest einen der folgenden Schritte:
- Ermitteln von Nutzbewuchsbereichen (NB), in welchen entsprechend der Saatgut-Positionsinformationen Nutzpflanzen zu erwarten sind;
- Ermitteln von Schadbewuchsbereichen (SB), in welchen entsprechend der Saatgut-Positionsinformationen Schadpflanzen zu erwarten sind.

4. Verfahren nach einem der vorstehenden Ansprüche,
**gekennzeichnet durch** zumindest einen der folgenden Schritte:
- kabelgebundenes Bereitstellen der Saatgut-Positionsinformationen für das landwirtschaftliche Spritzgerät (10);
- kabelloses Bereitstellen der Saatgut-Positionsinformationen für das landwirtschaftliche Spritzgerät (10).

5. Verfahren nach Anspruch 4,
**dadurch gekennzeichnet, dass** das Bereitstellen der Saatgut-Positionsinformationen für das landwirtschaftliche Spritzgerät (10) zumindest einen der folgenden Schritte umfasst:
- Senden der Saatgut-Positionsinformationen von einem mobilen Datenträger an das landwirtschaftliche Spritzgerät (10);
- Senden der Saatgut-Positionsinformationen von einem Zentralrechner, insbesondere über Mobilfunk, an das landwirtschaftliche Spritzgerät (10);
- Senden der Saatgut-Positionsinformationen von einer Sämaschine an das landwirtschaftliche Spritzgerät (10).

6. Verfahren nach einem der vorstehenden Ansprüche,
**gekennzeichnet durch** den Schritt:
- Aufzeichnen von Saatgut-Positionsinformationen durch eine Sämaschine, insbesondere während des Ausbringens von Saatgut.

7. Verfahren nach Anspruch 6,
**gekennzeichnet durch** zumindest einen der folgenden Schritte:
- Speichern der aufgezeichneten Saatgut-Positionsinformationen durch die Sämaschine;
- Bereitstellen der aufgezeichneten und/oder gespeicherten Saatgut-Positionsinformationen durch die Sämaschine.

8. Verfahren nach Anspruch 7,
**dadurch gekennzeichnet, dass** das Bereitstellen der aufgezeichneten und/oder gespeicherten Saatgut-Positionsinformationen durch die Sämaschine zumindest einen der folgenden Schritte umfasst:
- Senden der Saatgut-Positionsinformationen von der Sämaschine an einen mobilen Datenträger;
- Senden der Saatgut-Positionsinformationen von der Sämaschine an einen Zentralrechner, insbesondere über Mobilfunk;
- Senden der Saatgut-Positionsinformationen von der Sämaschine an das landwirtschaftliche Spritzgerät (10).

9. Verfahren nach einem der vorstehenden Ansprüche,
**gekennzeichnet durch** zumindest einen der folgenden Schritte:
- Erfassen von Nutzbewuchs (N), insbesondere Nutzbewuchsreihen (20a-20q), und deren Position durch das landwirtschaftliche Spritzgerät (10);
- Vergleichen der erfassten Positionen des Nutzbewuchses (N) und der Saatgut-Positionsinformationen,
- Korrigieren der Saatgut-Positionsinformationen anhand der erfassten Positionen des Nutzbewuchses (N).

10. Landwirtschaftliches Spritzgerät (10), insbesondere Feldspritze, mit
- mehreren Ausbringelementen zum Ausbringen einer Spritzflüssigkeit;
- einer Erfassungseinrichtung, welche dazu eingerichtet ist, potentiellen Schadbewuchs (P) und dessen Position zu erfassen;
- einer Steuerungseinrichtung, welche dazu eingerichtet ist, die Ausbringung der Spritzflüssigkeit durch die Ausbringelemente derart zu steuern, dass die Spritzflüssigkeit lokal auf tatsächlichen Schadbewuchs (S) ausgebracht wird;
wobei die Steuerungseinrichtung dazu eingerichtet ist, auf Grundlage von Saatgut-Positionsinformationen und der Position des erfassten potentiellen Schadbewuchses (P) den tatsächlichen Schadbewuchs (S) zu identifizieren,
**dadurch gekennzeichnet, dass** die Steuerungseinrichtung zum Untersuchen des Bewuchses mittels eines oder mehrerer Spektralsensoren durch das landwirtschaftliche Spritzgerät (10) eingerichtet ist, wobei das Identifizieren des tatsächlichen Schadbewuchses (S) durch das landwirtschaftliche Spritzgerät (10) auch auf Grundlage der Daten des einen oder der mehreren Spektralsensoren erfolgt, wobei zum Identifizieren von tatsächlichem Schadbewuchs (S) ein Schadbewuchs-Spektralbereich definiert ist, welchem im Wesentlichen sämtlicher zu erwartender Schadbewuchs (S) zugeordnet werden kann, oder mehrere unterschiedliche Spektralbereiche definiert sind, durch welche unterschiedliche Schadpflanzentypen oder Schadpflanzensorten erfasst werden können.

11. Spritzgerät (10) nach Anspruch 10,
**dadurch gekennzeichnet, dass** die Erfassungseinrichtung ein oder mehrere Satellitennavigationsmodule, insbesondere ein oder mehrere GPS-Module, umfasst, mittels welchen die Position des potentiellen Schadbewuchses (P) erfassbar ist.

12. Spritzgerät (10) nach Anspruch 10 oder 11,
**dadurch gekennzeichnet, dass** die Erfassungseinrichtung ein oder mehrere Spektralsensoren umfasst, mittels welchen eine Spektraluntersuchung des Bewuchses durchführbar ist.

13. Spritzgerät (10) nach einem der Ansprüche 10 bis 12,
**dadurch gekennzeichnet, dass** das Spritzgerät (10) zum Ausführen des Verfahrens zum Ausbringen einer Spritzflüssigkeit nach einem der Ansprüche 1 bis 9 ausgebildet ist.

## Claims

1. Method for applying a spray liquid by means of an agricultural sprayer (10), comprising the steps of:
- detecting potential harmful vegetation (P) and the position thereof by means of the agricultural sprayer (10); and
- controlling the application of the spray liquid by the agricultural sprayer (10) such that the spray liquid is applied locally to actual harmful vegetation (S);
- identifying the actual harmful vegetation (S) by means of the agricultural sprayer (10) on the basis of seed position information and the position of the detected potential harmful vegetation (P)
**characterized by** the step of:
- examining the vegetation by means of one or more spectral sensors by the agricultural sprayer (10), the agricultural sprayer (10) identifying the actual harmful vegetation (S) also on the basis of the data of the one or more spectral sensors, for identifying actual harmful vegetation (S) a harmful-vegetation spectral range being defined, to which substantially all the harmful vegetation (S) to be expected can be assigned, or a plurality of different spectral ranges being defined, by means of which different harmful plant types or harmful plant varieties can be detected.

2. Method according to claim 1,
**characterized in that** the seed position information comprises seed row position information and/or application lane position information.

3. Method according to claim 1 or 2,
**characterized by** at least one of the following steps:
- determining useful vegetation regions (NB), in which useful plants are to be expected according to the seed position information;
- determining harmful vegetation regions (SB), in which harmful plants are to be expected according to the seed position information.

4. Method according to any of the preceding claims,
**characterized by** at least one of the following steps:
- wired provision of the seed position information for the agricultural sprayer (10);
- wireless provision of the seed position information for the agricultural sprayer (10).

5. Method according to claim 4,
**characterized in that** providing the seed position information for the agricultural sprayer (10) comprises at least one of the following steps:
- transmitting the seed position information from a mobile data carrier to the agricultural sprayer (10);
- transmitting the seed position information from a central computer, in particular via mobile telecommunications, to the agricultural sprayer (10);
- transmitting the seed position information from a seed drill to the agricultural sprayer (10).

6. Method according to any of the preceding claims,
**characterized by** the step of:
- recording seed position information by a seed drill, in particular during the application of seed.

7. Method according to claim 6,
**characterized by** at least one of the following steps:
- storing the recorded seed position information by the seed drill;
- providing the recorded and/or stored seed position information by the seed drill.

8. Method according to claim 7,
**characterized in that** providing the recorded and/or stored seed position information by the seed drill comprises at least one of the following steps:
- transmitting the seed position information from the seed drill to a mobile data carrier;
- transmitting the seed position information from the seed drill to a central computer, in particular via mobile telecommunications;
- transmitting the seed position information from the seed drill to the agricultural sprayer (10).

9. Method according to any of the preceding claims,
**characterized by** at least one of the following steps:
- detecting useful vegetation (N), in particular useful vegetation rows (20a-20q), and the position thereof by the agricultural sprayer (10);
- comparing the detected positions of the useful vegetation (N) and the seed position information;
- correcting the seed position information on the basis of the detected positions of the useful vegetation (N).

10. Agricultural sprayer (10), in particular a field sprayer, comprising
- a plurality of application elements for applying a spray liquid;
- a detection device, which is designed to detect potential harmful vegetation (P) and the position thereof;
- a control device, which is designed to control the application of the spray liquid by the application elements in such a way that the spray liquid is applied locally to actual harmful vegetation (S);
the control device being designed to identify the actual harmful vegetation (S) on the basis of seed position information and the position of the detected potential harmful vegetation (P),
**characterized in that** the control device is designed to examine the vegetation by means of one or more spectral sensors by the agricultural sprayer (10), the agricultural sprayer (10) identifying the actual harmful vegetation (S) also on the basis of the data of the one or more spectral sensors, for identifying actual harmful vegetation (S) a harmful-vegetation spectral range being defined, to which substantially all the harmful vegetation (S) to be expected can be assigned, or a plurality of different spectral ranges being defined, by means of which different harmful plant types or harmful plant varieties can be detected.

11. Sprayer (10) according to claim 10,
**characterized in that** the detection device comprises one or more satellite navigation modules, in particular one or more GPS modules, by means of which the position of the potential harmful vegetation (P) can be detected.

12. Sprayer (10) according to claim 10 or 11,
**characterized in that** the detection device comprises one or more spectral sensors, by means of which a spectral examination of the vegetation can be carried out.

13. Sprayer (10) according to any of claims 10 to 12,
**characterized in that** the sprayer (10) is designed to carry out the method for applying a spray liquid according to any of claims 1 to 9.

## Revendications

1. Procédé permettant l'épandage d'un liquide de pulvérisation au moyen d'un appareil de pulvérisation (10) agricole, comportant les étapes de :
- détection d'une plante nuisible potentielle (P) et de sa position par l'appareil de pulvérisation (10) agricole ; et
- commande de l'épandage du liquide de pulvérisation par l'appareil de pulvérisation (10) agricole de telle sorte que le liquide de pulvérisation est épandu localement sur une plante nuisible réelle (S) ;
- identification de la plante nuisible réelle (S) par l'appareil de pulvérisation (10) agricole sur la base d'informations de position de semences et de la position de la plante nuisible potentielle (P) détectée
**caractérisé par** l'étape de :
- examen de la plante au moyen d'un ou de plusieurs capteurs spectraux par l'appareil de pulvérisation (10) agricole, dans lequel l'identification de la plante nuisible réelle (S) par l'appareil de pulvérisation (10) agricole est effectuée également sur la base des données du ou des capteurs spectraux, dans lequel, pour l'identification d'une plante nuisible réelle (S), une plage spectrale de plante nuisible est définie, laquelle peut être associée sensiblement à la totalité des plantes nuisibles attendues (S), ou plusieurs plages spectrales différentes sont définies, au moyen desquelles différents types de végétaux nuisibles ou variétés de végétaux nuisibles peuvent être détectés.

2. Procédé selon la revendication 1,
**caractérisé en ce que** les informations de position de semences comprennent des informations de position de rangées de semis et/ou des informations de position de voie d'épandage.

3. Procédé selon la revendication 1 ou 2,
**caractérisé par** au moins l'une des étapes suivantes :
- détermination de zones de plantes utiles (NB) dans lesquelles des végétaux utiles sont attendus en fonction des informations de position de semences ;
- détermination de zones de plantes nuisibles (SB) dans lesquelles des végétaux nuisibles sont attendus en fonction des informations de position de semences.

4. Procédé selon l'une des revendications précédentes,
**caractérisé par** au moins l'une des étapes suivantes :
- fourniture avec fil des informations de position de semences pour l'appareil de pulvérisation (10) agricole ;
- fourniture sans fil des informations de position de semences pour l'appareil de pulvérisation (10) agricole.

5. Procédé selon la revendication 4,
**caractérisé en ce que** la fourniture des informations de position de semences pour l'appareil de pulvérisation (10) agricole comprend au moins l'une des étapes suivantes :
- envoi des informations de position de semences depuis un support de données mobile à l'appareil de pulvérisation (10) agricole ;
- envoi des informations de position de semences depuis un ordinateur central, en particulier par l'intermédiaire d'une radiocommunication mobile, à l'appareil de pulvérisation (10) agricole ;
- envoi des informations de position de semences depuis un semoir à l'appareil de pulvérisation (10) agricole.

6. Procédé selon l'une des revendications précédentes,
**caractérisé par** l'étape de :
- enregistrement d'informations de position de semences par un semoir, en particulier pendant l'épandage de semences.

7. Procédé selon la revendication 6,
**caractérisé par** au moins l'une des étapes suivantes :
- mémorisation des informations de position de semences enregistrées par le semoir ;
- fourniture des informations de position de semences enregistrées et/ou mémorisées par le semoir.

8. Procédé selon la revendication 7,
**caractérisé en ce que** la fourniture des informations de position de semences enregistrées et/ou mémorisées par le semoir comprend au moins l'une des étapes suivantes :
- envoi des informations de position de semences depuis le semoir à un support de données mobile ;
- envoi des informations de position de semences depuis le semoir à un ordinateur central, en particulier par l'intermédiaire d'une radiocommunication mobile ;
- envoi des informations de position de semences depuis le semoir à l'appareil de pulvérisation (10) agricole.

9. Procédé selon l'une des revendications précédentes,
**caractérisé par** au moins l'une des étapes suivantes :
- détection d'une plante utile (N), en particulier de rangées de plantes utiles (20a-20q), et de leur position par l'appareil de pulvérisation (10) agricole ;
- comparaison des positions détectées de la plante utile (N) et des informations de position de semences ;
- correction des informations de position de semences au moyen des positions détectées de la plante utile (N).

10. Appareil de pulvérisation (10) agricole, en particulier pulvérisateur agricole, comportant
- plusieurs éléments d'épandage permettant l'épandage d'un liquide de pulvérisation ;
- un dispositif de détection configuré pour détecter une plante nuisible potentielle (P) et sa position ;
- un dispositif de commande configuré pour commander l'épandage du liquide de pulvérisation par les éléments d'épandage de telle sorte que le liquide de pulvérisation est épandu localement sur une plante nuisible réelle (S) ;
dans lequel le dispositif de commande est configuré pour identifier la plante nuisible réelle (S) sur la base d'informations de position de semences et de la position de la plante nuisible potentielle (P) détectée,
**caractérisé en ce que** le dispositif de commande est configuré pour examiner la plante au moyen d'un ou de plusieurs capteurs spectraux par l'appareil de pulvérisation (10) agricole, dans lequel l'identification de la plante nuisible réelle (S) par l'appareil de pulvérisation (10) agricole est également effectuée sur la base des données du ou des capteurs spectraux, dans lequel, pour l'identification d'une plante nuisible réelle (S), une plage spectrale de plante nuisible est définie, laquelle peut être associée sensiblement à la totalité des plantes nuisibles attendues (S), ou plusieurs plages spectrales différentes sont définies, au moyen desquelles différents types de végétaux nuisibles ou variétés de végétaux nuisibles peuvent être détectés.

11. Appareil de pulvérisation (10) selon la revendication 10,
**caractérisé en ce que** le dispositif de détection comprend un ou plusieurs modules de navigation par satellite, en particulier un ou plusieurs modules GPS, au moyen desquels la position de la plante nuisible potentielle (P) peut être détectée.

12. Appareil de pulvérisation (10) selon la revendication 10 ou 11,
**caractérisé en ce que** le dispositif de détection comprend un ou plusieurs capteurs spectraux au moyen desquels un examen spectral de la plante peut être réalisé.

13. Appareil de pulvérisation (10) selon l'une des revendications 10 à 12,
**caractérisé en ce que** l'appareil de pulvérisation (10) est configuré pour mettre en oeuvre le procédé permettant l'épandage d'un liquide de pulvérisation selon l'une des revendications 1 à 9.
